(19) Europäisches Patentamt
European Patent Office
Office européen des brevets

(11) Publication number : **0 683 209 A2**

(12) **EUROPEAN PATENT APPLICATION**

(21) Application number : **95303183.8**

(22) Date of filing : **11.05.95**

(51) Int. Cl.$^6$ : **C08L 77/00,** C08L 71/12, C08K 5/52, C08K 5/54, // (C08L77/00, 71:12, 83:04), (C08L71/12, 77:00, 83:04), (C08K5/52, 5:54)

(30) Priority : **19.05.94 US 245929**
**02.08.94 US 284337**

(43) Date of publication of application :
**22.11.95 Bulletin 95/47**

(84) Designated Contracting States :
**DE IT NL**

(71) Applicant : **GENERAL ELECTRIC COMPANY**
**1 River Road**
**Schenectady, NY 12345 (US)**

(72) Inventor : **Shaw, Jeremy Paul**
**Jankenberg 16**
**NL-4661 KV Halsteren (NL)**
Inventor : **Van Der Poel, Bartholomeus J. M.**
**Jonkheer van Vredenburchlaan 6**
**NL-4691 LG Tholen (NL)**

(74) Representative : **Szary, Anne Catherine et al**
**London Patent Operation,**
**GE Technical Services Co. Inc.,**
**Essex House,**
**12-13 Essex Street**
**London WC2R 3AA (GB)**

(54) **Flame retardant polyamide compositions.**

(57) Organic phosphorus containing compounds and polysiloxane compounds are incorporated into polymer matrices comprising polyamides and polyphenylene ether based compositions to produce polyamide compositions which unexpectedly display flame retardancy as well as high heat resistances.

EP 0 683 209 A2

## Background of the Invention

This invention relates to novel polyamide compositions. More particularly, the polyamide compositions comprise organic phosphorus containing compounds and polysiloxane compounds and they unexpectedly display flame retardant properties.

## Background of the Invention

Polyethers and/or polymer blends which contain polyphenylene ethers (PPE) constitute an invaluable class of engineering thermoplastic resins. Resins of polyphenylene ethers are characterized by a unique combination of chemical, physical and electrical properties. For instance, they are resistant to many solvents and generally display high impact strengths. As a result of this unique combination of properties, resins of polyphenylene ethers are suitable for a broad range of commercial applications.

Efforts have been made to prepare polymer blends which, while retaining their characteristic hydrolytic stability, dimensional stability and dielectric properties, have higher heat deflection temperatures. Particularly, there is a demand for immiscible blends, like polyamide blends, which possess increased heat deflection properties since they are, for instance, conventionally used in parts exposed to high temperatures in the automotive industry.

While thermoplastic resins and blends possess the above-described advantageous properties, they, like many other organic polymeric materials, are particularly desired when they possess flame retardant properties.

It is of increasing interest to prepare thermoplastic resins and blends prepared therefrom that are fire resistant. Such preparation conventionally employs adding halogen containing flame retardant additives to the polymer/blend. However, blends comprising said flame retardant additives are invariably environmentally unfriendly.

The instant invention, therefore, is directed to novel polyamide compositions that unexpectedly display flame retardant properties as well as improved heat resistances.

## Detailed Description of the Prior Art

Efforts have been made to prepare polyamide compositions that possess flame retardant properties. In U.S. Patent 4,866,144, self-extinguishing thermoplastic polyphenylene rether/polyamide molding materials are disclosed. Said materials comprise triazine compounds such as cyanuric acid, cyanuric acid derivatives and mixtures thereof and preferably melamine and/or melamine cyanurate as flame proofing agents.

Other investigators have focused their attention on polyamide blends in order to improve flame retardancy. European Patents 0436136 and 129825 describe blends of polyphenylene ethers and polyamides comprising phosphorus containing compounds in order to enhance flame retardant properties.

Still others, such as those described in European Patent 0369169, have revealed polymer compositions comprising polysiloxanes, polyamides and polyphenylene ethers having flame retardant properties.

The instant invention, however, is patentably distinguishable from the above-described since, among other reasons, it is directed to novel polyamide compositions comprising organic phosphorus containing compounds and polysiloxane compounds, wherein the polyamide compositions unexpectedly display flame retardant properties and heat resistances. Moreover, the instant polyamide compositions do not contain halogens and red phosphorus.

## Summary of the Invention

The instant invention is directed to novel polyamide compositions that unexpectedly display flame retardant properties and improved heat resistances. Said polyamide compositions comprise:

(a) a blend comprising polyamides and polyphenylene ether;

(b) organic phosphorus containing compounds; and

(c) polysiloxane compounds.

In the instant invention, flame retardant properties mean that UL-94 is V-O or V-1 at 1.6 mm and improved heat resistances mean Vicats of greater than about 150°C, wherein Vicats are the softening temperatures at which a plastic starts to soften as specified according to ISO 306.

## Detailed Description of the Preferred Embodiments

While it is preferred that the polyamide compositions of the instant invention comprise blends of polyamides

and polyphenylene ether, it is also within the scope of this invention to include in said compositions acrylic polymers including polymethylmethacrylate, acrylonitrile styrene copolymers, styrene-acrylonitrile-butadiene copolymers, polyvinyl chloride, polystyrene, butyrates, polyaliphatics, polycarbonates and polyesters, cellulosic, phenolic, amino and epoxy resins.

The polyphenylene ethers employed in the instant invention are typically prepared by the oxidative coupling of at least one monohydroxyaromatic compound such as 2,6-xylenol or 2,3,6-trimethylphenol. Catalyst systems are generally employed for such coupling; they typically contain at least one heavy metal compound such as a copper, manganese or cobalt compound, usually in combination with various other materials.

Furthermore, polyphenylene ethers suitable for use in the practice of the present invention may be prepared by any of a number of processes utilizing precursor corresponding phenols or derivatives thereof. Examples for their production are disclosed in U.S. Patents 3,306,874; 3,306,875; 3,257,357; 3,257,358; 3,337,501; and 3,787,361, all incorporated herein by reference.

Additional useful polyphenylene ethers are those which comprise molecules having at least one aminoalkyl-containing end group. The aminoalkyl radical is typically located in an ortho position to the hydroxy group. Products containing such end groups may be obtained by incorporating an appropriate primary or secondary monoamine such as di-n-butylamine or dimethylamine as one of the constituents of the oxidative coupling reaction mixture. Also frequently present are 4-hydroxybiphenyl end groups, typically obtained from reaction mixtures in which a by-product diphenoquinone is present, especially in a copper-halide-secondary or tertiary amine system. A proportion of the polymer molecules may contain at least one of said aminoalkyl-containing and 4-hydroxybiphenyl end groups.

The polyamides employed in the instant invention are obtained, for instance, by polymerizing a monoamine-monocarboxylic acid; or a lactam thereof having at least 2 carbon atoms between the amino and carboxylic acid group or by polymerizing substantially equimolar proportions of a diamine which contains at least 2 carbon atom amino groups and a dicarboxylic acid; or by polymerizing a monoaminocarboxylic acid or a lactam thereof as defined hereinabove together with substantially equimolar proportions of a diamine and a dicarboxylic acid. The dicarboxylic acid in the form of a functional derivative thereof; for example, an ester or acid chloride.

The term "substantially equimolecular" proportions (of the diamine and of the dicarboxylic acid) is used to cover both strict equimolecular proportions and slight departures therefrom which are involved in conventional techniques for stabilizing the viscosity of the resultant polyamides.

Examples of the aforementioned monoaminomonocarboxylic acids or lactams thereof which are useful in preparing the polyamides include those compounds containing from 2 to 16 carbon atoms between the amino and carboxylic acid groups, said carbon atoms forming a ring with the -CO-NH-group in the case of a lactam. As particular examples of aminocarboxylic acids and lactams there may be mentioned aminocaproic acid, butyrolactam, pivalolactam, caprolactam, capryl-lactam, enantholactam, undecanolactam, dodecanolactam and 3- and 4-aminobenzoic acids.

Diamines suitable for use in the preparation of the polyamides include straight chain and branched, alkyl, aryl and alkyl-aryl diamines. Such diamines include, for example, those represented by the general formula

$$H_2N(CH_2)_nNH_2 , \qquad I$$

wherein n is an integer of from 2 to 16, such as trimethylenediamine, tetramethylenediamine, pentamethylenediamine, octamethylenediamine and especially hexamethylenediamine, as well as trimethyl hexamethylene diamine, meta-phenylene diamine, meta-xlylene diamine and the like.

The dicarboxylic acids may be aromatic, for example, isophthalic and terephthalic acids. Preferred dicarboxylic acids are of the formula

$$HOOC\text{-}Y\text{-}COOH , \qquad II$$

wherein Y represents a divalent aliphatic group containing at least 2 carbon atoms, and examples of such acids are sebacic acid, octadecanedoic acid, suberic acid, glutaric acid, pimelic acid and adipic acid.

Typical examples of polyamides (Nylons) useful in the instant polyamide compositions include for example polyamides 4/6, 6, 6/6, 11, 12, 6/3, 6/4, 6/10 and 6,12 as well as polyamides resulting from terephthalic acid and/or isophthalic acid and trimethyl hexamethylene diamine, polyamides resulting from adipic acid and meta xylylenediamines, polyamides resulting from adipic acid, azelaic acid and 2,2-bis-p-aminocyclohexyl)propane, semi-crystalline polyamides resulting from combinations of terephthalic and/or isophthalic and/or adipic acids with hexamethylene diamine, semi-crystalline polyamides resulting from terephthalic and/or isophthalic acids and hexamethylene and 2-methyl pentamethylene diamines, and polyamides resulting from terephthalic acid and 4,4'-diamino-dicyclohexylmethane. Mixtures and/or copolymers of two or more of the foregoing polyamides or prepolymers, respectively, are also within the scope of the present invention. Preferred polyamides are the polyamides 6, 6/6, 6/10 and 4/6, most preferably polyamide 6/6.

It is also understood that use of the term "polyamides" herein and in the appended claims is intended to

include the toughened or super tough polyamides. Super tough polyamides or super tough nylons, as they are more commonly known, are available commercially, e.g., from E.I. duPont under the tradename Zytel ST, or may be prepared in accordance with a number of U.S. patents, including, among others, Epstein, U.S. Patent 4,174,358; Novak, U.S. Patent 4,474,927; Roura, U.S. Patent 4,346,194; and Joffrion, U.S. Patent 4,251,644, herein incorporated by reference. These super tough nylons are prepared by blending one or more polyamides with one or more polymeric or copolymeric elastomeric toughening agents. Suitable toughening agents are disclosed in the above-identified U.S. patents, as well as in Caywood, Jr., U.S. Patent 3,884,882 and Swiger, U.S. Patent 4,147,740 and Gallucci et al., "Preparation and Reactions of Epoxy-Modified Polyethylene", *J. Appl. Poly. Sci.*, Vol. 27, pp. 425-437 (1982) herein incorporated by reference. Typically, these elastomeric polymers and copolymers may be straight chain or branched as well as graft polymers and copolymers, including core-shell graft copolymers, and are characterized as having incorporated therein either by copolymerization or by grafting on the performed polymer, a monomer having functional and/or active or highly polar groupings capable of interacting with or adhering to the polyamide matrix so as to enhance the toughness of the polyamide polymer.

It is also within the scope of the instant invention to employ compatibilization agents in the blends. Such compatibilization agents include, for instance, compounds selected from the group consisting of tetracarboxylic acids of aromatic and aliphatic compounds, alicyclic compounds, dianhydride derivatives and halogen substituted phthalic anhydrides. A more detailed description of blend compatibilization may be found in U.S. Patent 4,826,933, the disclosure of which is incorporated herein by reference.

The blending ratio of polyamide to polyphenylene ether units is about 5 to about 95% by weight, preferably about 30 to about 70% by weight of the former to about 95 to about 5% by weight, preferably about 70 to about 30% by weight of the latter.

The method for producing the blends employed in the present invention is not particularly limited, and the conventional methods are satisfactorily employed. Generally, however, melt blending methods are desirable. The time and temperature required for melt-blending are not particularly limited, and they can properly be determined according to the composition of the material. The temperature varies somewhat with the blending ratio of the polyphenylene ether to polyamide, but it is generally within a range of 270° to 350°C. A prolonged time and/or a high shear rate is desirable for mixing, but the deterioration of the resin composition advances. Consequently, the time needs to be determined taking into account these points.

Any of the melt-blending methods may be used, if it can handle a molten viscous mass. The method may be applied in either a batchwise form or a continuous form. Specifically, extruders, Bambury mixers, rollers, kneaders and the like may be employed.

It is within the scope of the invention to include in the blending step elastomeric impact modifiers compatible with either or both of the polyphenylene ether and the polyamide.

Impact modifiers for polyphenylene ether-polyamide blends are well known in the art. They are typically derived from one or more monomers selected from the group consisting of olefins, vinyl aromatic monomers, acrylic and alkylacrylic acids and their ester derivatives as well as conjugated dienes. Especially preferred impact modifiers are the rubbery high-molecular weight materials including natural and synthetic polymeric materials showing elasticity at room temperature. They include both homopolymers and copolymers, including random, block, radial block, graft and core-shell copolymers as well as combinations thereof.

A particularly useful class of impact modifiers comprises the AB (diblock) and ABA (triblock) copolymers and core-shell graft copolymers of alkenylaromatic and diene compounds, especially those comprising styrene and butadiene or isoprene blocks. The conjugated diene blocks may be partially or entirely hydrogenated, whereupon they may be represented as ethylene-propylene blocks or the like and have properties similar to those of olefin block copolymers. Examples of triblock copolymers of this type are polystyrene-polybutadiene-polystyrene (SBS), hydrogenated polystyrene-polybutadiene-polystyrene (SEBS), polystyrene-polyisoprene-polystyrene (SIS), poly(a-methylstyrene)-polybutadiene-poly(a-methylstyrene) and poly(a-methylstyrene)-polyisoprene-poly(a-methylstyrene). Particularly preferred triblock copolymers are available commercially as CARIFLEX®, KRATON D® and KRATON G® from Shell.

Also suitable as impact modifiers are the ionomer resins, which may be wholly or partially neutralized with metal ions, and the core-shell type graft copolymers. In general, the latter have a predominantly conjugated diene or crosslinked acrylate rubbery core and one or more shells polymerized thereon and derived from monoalkenylaromatic and/or acrylic monomers alone or in combination with other vinyl monomers. Included are copolymers wherein an interpenetrating network of the resins employed characterizes the interface between the core and shell, such as those available from General Electric Company and described in U.S. Patent 3,944,631.

Other impact modifiers include the above-described types containing units having polar groups or active functional groups, as well as miscellaneous polymers such as Thiokol rubber, polysulfide rubber, polyurethane rubber, polyether rubber (e.g., polypropylene oxide), epichlorohydrin rubber, ethylene-propylene rubber, thermoplastic polyester elastomers and thermoplastic ether-ester elastomers.

Additionally, the polyamide and polyphenylene ether blends may further comprise, for instance, functionalized polyphenylene ethers, polycarboxylic acids, ester groups, epoxy groups, anhydride groups, rubbers or any other conventional moiety employed to improve the properties of the blend.

The organic phosphorus containing compounds that may be employed in the instant invention are any of those typically employed to enhance flame retardancy, including those that do and do not react with polyamides. An example is commercially available aromatic phosphorus containing compounds having the formula

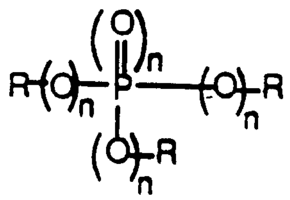

, III

wherein each n is independently 0 or 1 and each R is independently an alkyl, cycloalkyl, aryl, alkyl substituted aryl, halogen substituted aryl, aryl substituted alkyl and halogen, provided that at least one R is aryl.

Illustrative examples of phosphate containing compounds represented by formula III include phenylbisdodecyl phosphate, phenylbisneopentyl phosphate, phenyl-bis(3,5,5'-trimethylhexyl phosphate), ethyldiphenyl phosphate, 2-ethyl-hexyldi(p-tolyl)phosphate, bis-(2-ethylhexyl)p-tolylphosphate, tritolyl phosphate, bis-(4-ethylhexyl)phenyl phosphate, tri-(nonylphenyl)phosphate, di(dodecyl)p-tolyl phosphate, tricresyl phosphate, triphenyl phosphate, dibutylphenyl phosphate, 2-chloroethyldiphenyl phosphate, p-tolyl bis-(2,5,5'-trimethylhexyl)phosphate, 2-ethylhexyldiphenyl phosphate, and the like.

Additional examples of organic phosphorus containing compounds that may be employed in the instant invention include those described in U.S. Patent 4,866,114, the disclosure of which is incorporated herein by reference.

The preferred polysiloxane compounds employed in the instant invention are commercially available and are represented by the formula

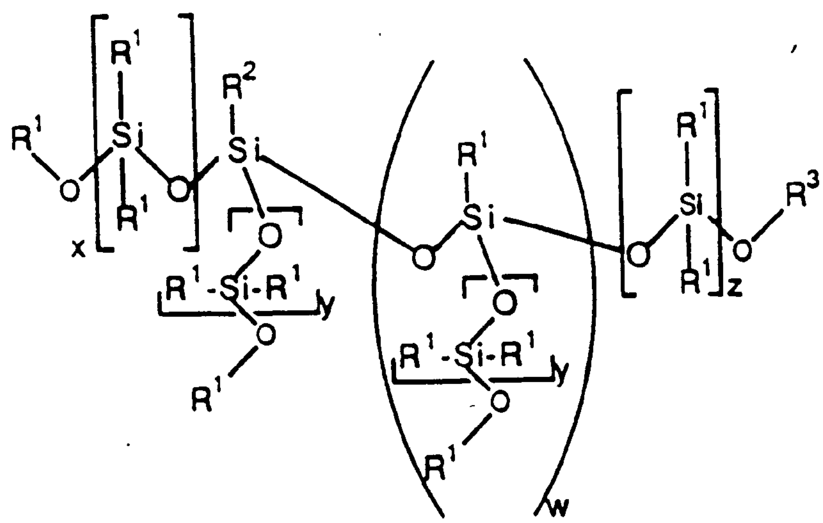

, IV

wherein each $R^1$ is independently a $C_{1-5}$ alkyl group and preferably a methyl group and $R^2$ is a $C_{1-5}$ alkyl group or a primary or secondary amino group such as a N-(2-aminoalkyl)-3-aminoalkyl group, provided that $R^2$ is a $C_{1-5}$ alkyl group when w is 1 and a N-(2-aminoalkyl)-3-aminoalkyl group when w is 0. It is often preferred that $R^2$ is a methyl group or a N-(2-aminoethyl)-3-aminopropyl group. $R^3$ is hydrogen or a $C_{1-5}$ alkyl group, preferably a methyl group. W is 0 or 1 and x and y are each independently an integer from 1 to 7 and z is an integer from 0 to 7. It is noted herein that any combination of compounds represented by formula IV may be employed.

It is also within the scope of the invention to employ polysiloxanes represented by the formulae

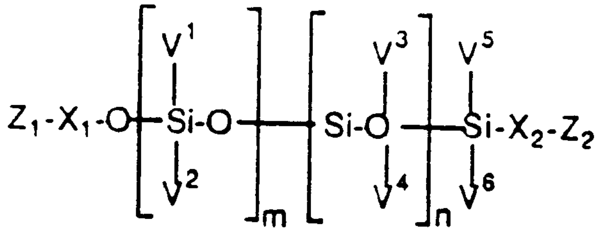

, V

and

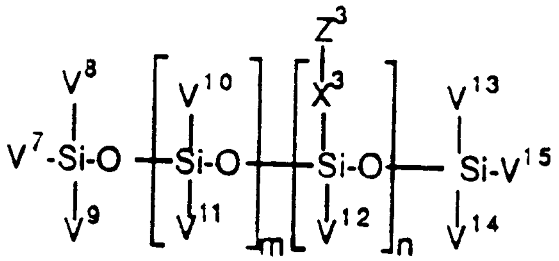

, VI

wherein m + n has a value of 5-2000, $V^1$-$V^{15}$, each independently of each other, represent a hydrogen atom or one of the following groups having 1-12 carbon atoms: alkyl, alkoxy, alkenyl, aryl, aralkyl, alkylaryl, which groups may be halogenated; wherein $X_1$, $X_2$, $X_3$, each independently of each other, represent one of the following groups: alkylene, cycloalkylene, arylene, aralkylene, alkylarylene; wherein $Z_1$, $Z_2$, $Z_3$ each represent one of the following groups: $-NV^{16}V^{17}$, $-NH-(CH_2)_q-NV^{16}V^{17}$ in which $V^{16}$ and $V^{17}$, each independently of each other, represent a hydrogen atom or an alkyl group having 1-12 carbon atoms, q has a value from 1-10, an aliphatic or cycloaliphatic epoxide, a carboxylic acid or anhydride group, $Z_1$ or $Z_2$ is a hydrogen atom, in which, however, the compound of formula V may not comprise simultaneously an amine group and an epoxide group or not simultaneously an amino group and a carboxylic acid group, or not simultaneously an epoxide group, and a carboxylic acid or anhydride group.

The polyamide composition of the instant invention comprises no more than about 60% by weight polyphenylene etherpolyamide blend (PPE-PA) but preferably no more than about 95% by weight PPE-PA based on total weight of the composition. Further, the polyamide compositions of this invention often comprise of no more than about 5% by weight phosphorus containing compounds but preferably no more than about 15% by weight of phosphorus containing compounds based on total weight of the compositions and no more than about 10% by weight of polysiloxane compounds but preferably no more than about 5% by weight of polysiloxane compounds based on total weight of the composition.

It is also noted herein that the polyamide compositions of this invention may also contain conventional ingredients such as fillers, additional flame retardants (such as tripiperidine phosphine oxide and magnesium or aluminum hydroxide), pigments, dyes, stabilizers, antistatic agents, crystallization aids, mold release agents and the like, as well as resinous components not previously discussed. Other additives that may be employed to enhance flame retardancy in the instant invention include triarylphosphine oxides and aromatic diphosphates. Illustrative examples of triarylphosphine oxides include triphenylphosphine oxide, tritolylphosphine oxide, trinonylphosphine oxide and trinaphthylphosphine oxide. Triphenylphosphine oxide is often preferred. The aromatic diphosphates that may be employed in this invention have the formula

VII

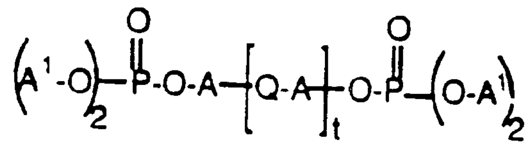

wherein each A and $A^1$ are independently a substituted or unsubstituted aliphatic, alicyclic or aromatic radical and Q is a covalent bond linking a carbon in each A or a bridging radical selected from the group consisting of

$CH_2$, $C(CH_3)_2$, S, $SO_2$, CO, O, and N=N and t is an integer from 0 to 4.

Additional additives that may be employed in the instant invention to enhance flame retardancy include group IIA sulfates and especially calcium sulfate and barium sulfate and group IIB borates and especially zinc borate. Melamine cyanurate may also be employed; however, it is not required.

The following example illustrates and facilitates the production of the flame retardant polyamide compositions of the instant invention. The molecular structure of the product may be confirmed by proton and carbon 13 nuclear magnetic resonance spectroscopy.

## Example

Flame retardant polyamide composition granulates were prepared by tumble mixing and extruding at 290°C 88g of a polyphenylene ether/Nylon 6/6 blend (60/40), 2g of polysiloxane (w = 0; x, y, z = 5; $R^1$ = methyl groups; $R^2$ = N-2-(aminoethyl)-3-aminopropyl group/w = 0; x, y, z = 5; $R^1$ = methyl groups and $R^2$ = methyl group/w = 0; z = 0; y = 5 $R^1$ = methyl groups; $R^2$ = methyl groups; $R^3$ = hydrogen/w = 1; x, y, z = 5; $R^1$ = methyl groups; $R^2$ = methyl group [2:3:2:1 mixturel) as depicted by formula IV and 10g of triphenylphosphate. The granulates were subsequently heated to 300°C and molded to form 1.6 mm UL bars.

The data in the following table has been compiled to demonstrate the new and unexpected superior properties of the polyamide compositions of the instant invention. Said new and unexpected results are the result of the synergistic effect of the phosphate compounds and polysiloxane compounds in the compositions. It is also noted herein that when employing additives, the weight percent of polyphenylene ether/polyamide blend is decreased.

TABLE

| Entry | Phosphate Compound | Polysiloxane Compound | Flame Retardancy | Vicat (°C)[c] |
|---|---|---|---|---|
| 1[a] | No | No | Fail | 216 |
| 2 | Yes | No | Fail | 155 |
| 3 | No | Yes | Fail | 216 |
| 4 | Yes | Yes | V-1[b] | 150 |
| 5[e] | Yes | No | V-2[d] | 152 |

[a]PPO/PA 60/40 (control).
[b]UL 94 is V-1 at 1.6 mm.
[c]Vicat B120 (ISO 306) 50N and 120°C/hr.
[d]UL94 is V-2 at 1.6 mm.
[e]84% by weight PPO/PA 60/40 blend with 6% by weight melamine cyanurate.

## Claims

1. A polyamide composition comprising:
   (a) a blend comprising polyamides and polyphenylene ether;
   (b) organic phosphorus containing compounds; and
   (c) polysiloxane compounds.

2. A polyamide composition in accordance with claim 1 wherein said organic phosphorus containing compounds have the formula

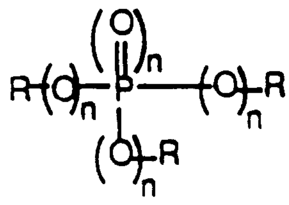

wherein each n is independently 0 or 1 and each R is independently an alkyl, cycloalkyl aryl, alkyl substituted aryl, halogen substituted aryl, aryl substituted alkvl or halogen, provided that at least one R is aryl.

3. A polyamide composition in accordance with claim 1 or claim 2 wherein said polysiloxane compounds have the formula

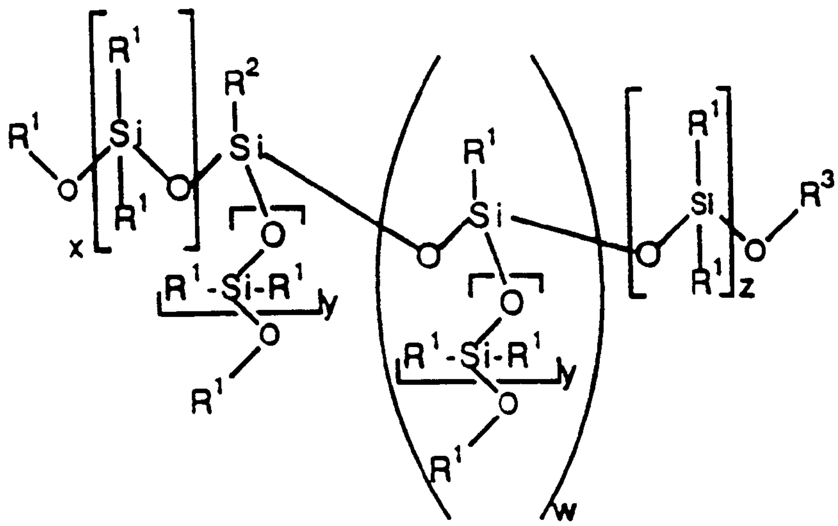

and each $R^1$ is independently a $C_{1-5}$ alkyl group and $R^2$ is a $C_{1-5}$ alkyl group or a N-(2-aminoalkyl)-3-aminoalkyl group, provided that $R^2$ is a N-2-(2-aminoalkyl)-3-aminoalkyl group when w is 0 and $R^3$ is hydrogen or a $C_{1-5}$ alkyl group and w is 0 or 1 and x and y are each independently an integer from 1 to 7 and z is an integer from 0 to 7.

4. A polyamide composition in accordance with claim 4 wherein $R^2$ is a methyl group or a N-(2-aminoethyl)-3-aminopropyl group.

5. A polyamide composition in accordance with claim 1 wherein said polyamide composition comprises no more than about 60% by weight of said blend comprising polyamides and polyphenylene ether based on total weight of the polyamide composition.

6. A polyamide composition in accordance with claim 1 wherein said polyamide composition comprises no more than about 95% by weight of said blend comprising polyamide and polyphenylene ether based on total weight of the polyamide composition.

7. A polyamide composition in accordance with claim 1 wherein said blend comprising polyamides and polyphenylene ether is about 5 to about 95% by weight of the former and about 95 to about 5% by weight of the latter based on total weight of the blend comprising polyamide and polyphenylene ether.

8. A polyamide composition in accordance with claim 1 wherein said polyamide composition comprises no more than about 15% by weight of the organic phosphorus containing compounds based on total weight of the polyamide composition.

**9.** A polyamide composition in accordance with claim 1 wherein said polyamide composition comprises no more than about 10% by weight of the polysiloxane compound based on total weight of the polyamide composition.

**10.** A polyamide composition in accordance with claim 1 wherein said polyamide composition further comprises additives.